# EUROPÄISCHE PATENTSCHRIFT

(11) **EP 1 714 127 B1**
(45) Veröffentlichungstag und Bekanntmachung des Hinweises auf die Patenterteilung: **06.06.2012**
(21) Anmeldenummer: 05700984.7
(22) Anmeldetag: 18.01.2005
(51) Int. Cl.: G01D 11/24, G01K 1/14, G01L 9/00, G01L 19/00

(54) **SENSOR MIT EINEM MODULAREN ANSCHLUSS**
SENSOR COMPRISING A MODULAR CONNECTION
CAPTEUR A RACCORD MODULAIRE

(30) Priorität: 21.01.2004 DE 102004003278
(43) Veröffentlichungstag der Anmeldung: 25.10.2006
(73) Patentinhaber: Priamus System Technologies AG, 8200 Schaffhausen (CH)
(72) Erfinder: BADER, Christopherus, CH-8413 Neftenbach (CH)
(74) Vertreter: Weiss, Peter
(86) Internationale Anmeldenummer: PCT/EP2005/000409
(87) Internationale Veröffentlichungsnummer: WO 2005/071379

(56) Entgegenhaltungen:
- CH-A5- 679 951
- JP-A- 59 216 028
- US-A- 5 535 629

## Beschreibung

Die Erfindung betrifft einen Sensor zum Ermitteln einer Messgrösse in einem Spritzgiesswerkzeug mit einem Grundkörper und einem Sensorelement zur Messgrössenumformung und/oder -übertragung.

### Stand der Technik

Sensoren kommen in vielfältigster Form in nahezu allen industriellen Anwendungen zum Einsatz. Überall, wo Vorgänge überwacht und/oder gesteuert werden müssen, ist es notwendig, die zu messenden Grössen aufzunehmen, evtl. umzuformen, weiterzuleiten und evtl. weiterzuverarbeiten.

Entsprechend der zu messenden physikalischen Grösse sind die Sensoren mit dafür geeigneten Sensorelementen ausgestattet. Diese Sensorelemente müssen auf die zu messende physikalische Grösse reaktiv sein. In den meisten Fällen ist es wünschenswert, dass die zu messende physikalische Grösse in eine andere physikalische Grösse, insbesondere elektrische oder optische Signale, umgewandelt werden.

Die Form und die Gestalt der Sensoren richtet sich nach den Randbedingungen im jeweiligen Einsatzfall. So kann es notwendig sein, für verschiedene Einsatzfälle jeweils individuell zugeschnittene Sensoren einsetzen zu müssen. Dies kann in hohen Produktionskosten für die Sensorik einer Anlage und/oder eines Einsatzfalles resultieren.

Aus der US-A 5,535,629 ist ein Sensor für die Ermittlung des Druckes eines Mediums aufgezeigt. In einem Verbindungshaus befindet sich eine Druckmesszelle mit einer Membran. In das Verbindungshaus ist auch ein austauschbares Verbindungselement eingeschraubt, über welches der gesamte Sensor in eine Wand eingesetzt werden kann. Damit das zu messende Medium zu der Druckmesszelle bzw. Membran gelangen kann, durchzieht das Verbindungselement eine Axialbohrung, durch welche das zu bestimmende Medium zur Membran hingeführt wird.

Beispielsweise offenbart die CH 679 951 A5 eine Anordnung zur Druckmessung insbesondere in Spritzgiessformen. Dazu wird ein Kraftaufnehmer eingesetzt, der durch eine Membranpartie gegen das Medium abgeschlossen ist. Der Mediendruck krümmt die dünnwandige Membranpartie nach aussen und überträgt sich derart auf den Kraftaufnehmer.

Des Weiteren offenbart JP 59 216028 einen Sensor zum Messen einer Druckwelle eines Brenngases, bei der ein elektrischer Aufnehmer über ein externes Gehäuse mit einem druckaufnehmenden Stab verbunden wird.

### Aufgabe

Die Aufgabe der vorliegenden Erfindung ist es, einen vielfältig und variabel einsetzbaren Sensor für den jeweiligen Anwendungsfall zur Verfügung zu stellen.

### Lösung der Aufgabe

Zur Lösung dieser Aufgabe führen die Merkmal des kennzeichnenden Teils des Anspruchs 1.

In typischen Ausführungsbeispielen ist dem Sensorelement ein Aufnahmeelement zugeordnet, weiches die zu messende Grösse direkt von dem zu messenden Medium aufnimmt und ohne Messgrössenumformung auf das Sensorelement überträgt und das Aufnahmeelement an dem Sensorelement austauschbar ist.

Das Aufnahmeelement überträgt die zu messende Grösse, nimmt aber noch keine Messgrössenumformung vor. Daher sind die Materialanforderungen an das Aufnahmeelement nicht besonders hoch, wodurch einfache und kostengünstige Materialien zum Einsatz kommen können. Zweckmässigerweise sind diese Materialien auch leicht verarbeitbar und können so örtlichen Gegebenheiten schnell und einfach angepasst werden.

Wenn sich die Anpassung an die räumlichen Gegebenheiten auf das Aufnahmeelement beschränken lässt, kann immer das gleiche Sensorelement zum Einsatz kommen, das auf einem immer gleichen Grundkörper befestigt werden kann. Nur das Aufnahmeelement wird angepasst. Auf diese Weise kann durch einfache Adaption des Aufnahmeelementes an örtliche Gegebenheiten ein Sensor schnell und kostengünstig für einen bestimmten Anwendungsfall hergestellt werden.

Vorteilhafterweise sind dem Sensorelement unterschiedliche Aufnahmeelemente zuordenbar. Dadurch kann der Sensor durch Zuordnung eines bestimmten Aufnahmeelementes rasch für einen spezifischen Einsatzfall mit spezifischen räumlichen Rahmenbedingungen hergestellt werden.

Bevorzugterweise ist das Aufnahmeelement austauschbar bzw. lösbar. Dies geschieht nach einer Art Baukastensystem. Dadurch kann der Sensor mit unterschiedlichen Aufnahmeelementen mit einem Sensorelement zeitlich nacheinander in verschiedenen Einsatzfällen verwendet werden. Dies ist von hohem Interesse, wenn die Messung ein teures Sensorelement erfordert, das nicht ständig eingesetzt werden muss und an anderer Stelle verwendet werden kann.

Ist das Sensorelement fest mit dem Aufnahmeelement verbunden, insbesondere verklebt, verstiftet, vernietet oder verpresst, werden Einsatzfälle möglich, wo Eigenschaften einer nicht lösbaren Verbindung gefordert sind.

Die Anpassung an örtliche Gegebenheiten erfolgt häufig durch die Anpassung des Sensors an bestimmte Grösse und Formen der Ausnehmung. Insbesondere ist die Ausnehmung häufig eine Bohrung. Vorteilhafterweise geschieht die Anpassung des Sensors durch die Anpassung des Aufnahmeelementes an diese Bohrungen. In günstigen Fällen wird auf einem Rohaufnahmeelement eine Spitze mit einer Querschnittsform und/oder Stirnfläche ausgeformt, so dass das Aufnahmeelement in die dafür vorgesehene Bohrung eingeführt werden kann.

Vorteilhafterweise ist das Sensorelement wieder lösbar mit dem Grundkörper verbunden. Dies ergänzt den Gedanken des Baukastenprinzips dahingehend, dass verschiedene Formen von Sensorelementen zum Einsatz kommen können. Das kann dort interessant sein, wo es nicht ausreicht, dass nur das Aufnahmeelement den örtlichen Gegebenheiten angepasst wird.

Ferner ist denkbar, dass sich die zuordenbaren Sensorelemente in der Art der umzuformenden Messgrösse unterscheiden. So könnte dem Grundkörper einmal ein Sensorelement zugeordnet werden, dass temperatursensibel ist, und ein anderes Mal ein drucksensibles Sensorelement

In einer vorteilhaften Ausgestaltung ist das Aufnahmeelement ein Druck- und oder Kraftübertragungselement. In diesem Anwendungsfall können besonders einfache und günstig zu verarbeitende Materialien zum Einsatz kommen. Beispielhaft, aber nicht beschränkt darauf, ist hier an den Einsatz von Sensoren in Spritzgiesswerkzeugen gedacht, wo ein Werkzeuginnendruck über ein solches Kraftübertragungselement auf ein Sensorelement übertragen werden kann. Durch Anpassung des Sensorelementes an die Rahmenbedingungen des jeweiligen Einsatzfalles kann hierdurch der Sensor vielfältiger einsetzbar sein.

In dem beispielhaft geschilderten Anwendungsfall des Spritzgiesswerkzeugs mit einem gleichen Grundkörper, aber unterschiedlichen Sensorelementen und/oder Aufnahmeelementen könnte nicht nur der Druck, sondern auch die Temperatur gemessen werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen Längsschnitt durch einen Drucksensor zur Messung des Werkzeuginnendrucks einer Kavität in einem Spritzgiesswerkzeug in Gebrauchslage;
Figur 2 einen schematisch dargestellten Längsschnitt von mehreren Drucksensoren mit unterschiedlichen Aufnahmeelementen in Gebrauchslage;
Figur 3 einen Teilschnitt durch einen Kraftsensor mit einem Aufnahmeelement in der Wand einer Kavität;
Figur 4 eine Draufsicht auf den Kraftsensor aus Figur 3 ohne das Aufnahmeelement.

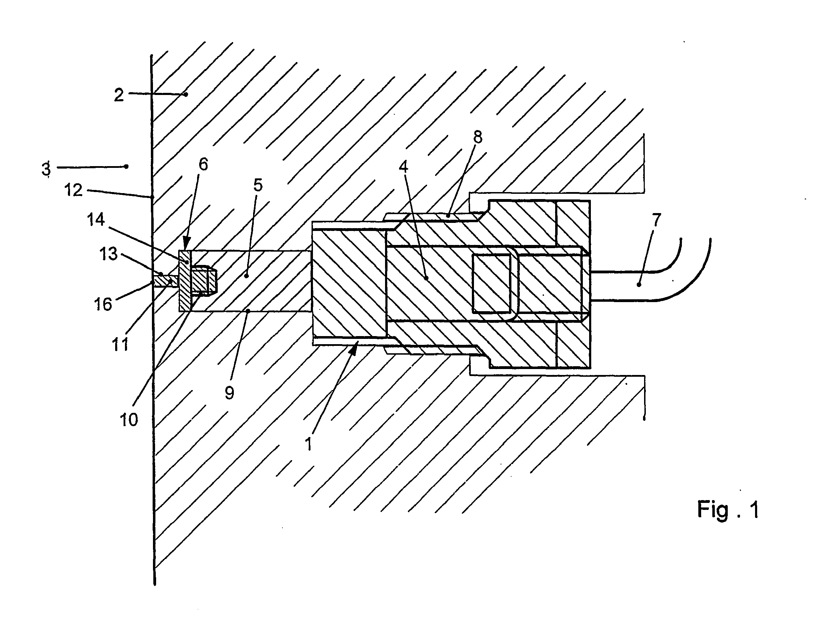

In Figur 1 ist ein Sensor 1 erkennbar, der in eine Wand 2 einer Kavität 3 eines Spritzgiesswerkzeugs eingebaut ist. Der Sensor 1 hat die Aufgabe, den Werkzeuginnendruck des geschmolzenen und aushärtenden Kunststoffmaterials in der Kavität 3 zu messen. Er besteht aus einem Grundkörper 4, einem Sensorelement 5 und einem Aufnahmeelement 6. Rückwärtig führt ein Kabel 7 z. B. über einen Kabelkanal an eine nicht dargestellte Auswerteinheit.

Der Grundkörper 4 ist mittels eines Gewindes 8 in der Wand 2 verschraubt. An den Grundkörper 4 schliesst sich in Richtung zu der Kavität 3 das Sensorelement 5 an, das in einer Bohrung 9 geführt ist. Zwischen dem Sensorelement 5 und der Kavität 3 ist das Aufnahmeelement 6 angeordnet. Das Aufnahmeelement 6 ist über ein Gewinde 10 mit dem Sensorelement 5 verschraubt. Eine Spitze 11 des Aufnahmeelementes 6 ist in einer Bohrung 13 geführt und eine Stirnfläche 16 der Spitze 11 liegt in der Ebene einer Innenwand 12 der Kavität 3.

Ein Durchmesser der Bohrung 13 ist kleiner als der Durchmesser der Bohrung 9. Der mit dem Sensorelement 5 verschraubte Basisteil 14 des Aufnahmeelementes 6 ist ebenfalls in der Bohrung 9 geführt.

Das Aufnahmeelement 6 ist ein Druck- und/oder Kraftübertragungselement.

Die Funktionsweise der Erfindung ist die folgende:
Bei der Herstellung des Sensors 1 wird der Grundkörper 4 mit dem Sensorelement 5 und dem Aufnahmeelement 6 verbunden. Danach wird der Sensor 1 in die dafür vorgesehenen Bohrungen 9 und 13 in der Wand 2 eingeführt und mittels des Gewindes 8 in der Wand 2 verschraubt.

In dieser Anordnung grenzt das Druckaufnahmeelement 6 an die Kavität 3 und übertragt den Werkzeuginnendruck in der Kavität 3 auf das Sensorelement 5, das eine Messgrössenumformung vornimmt. Insbesondere kann der Werkzeuginnendruck, der über das Aufnahmeelement 6 an das Sensorelement 5 übertragen wird, in elektrische Signale umgewandelt werden, die über den Grundkörper 4 des Sensors 1 und das Kabel 7 an eine nicht dargestellte Auswerteeinheit weitergeleitet werden. Es ist aber auch denkbar, dass das Sensorelement 5 den Druck in eine andere weiterleitbare Grösse, bspw. eine optische, umformt, welche über entsprechende Übertragungsmittel an eine Auswerteeinheit weitergeleitet wird.

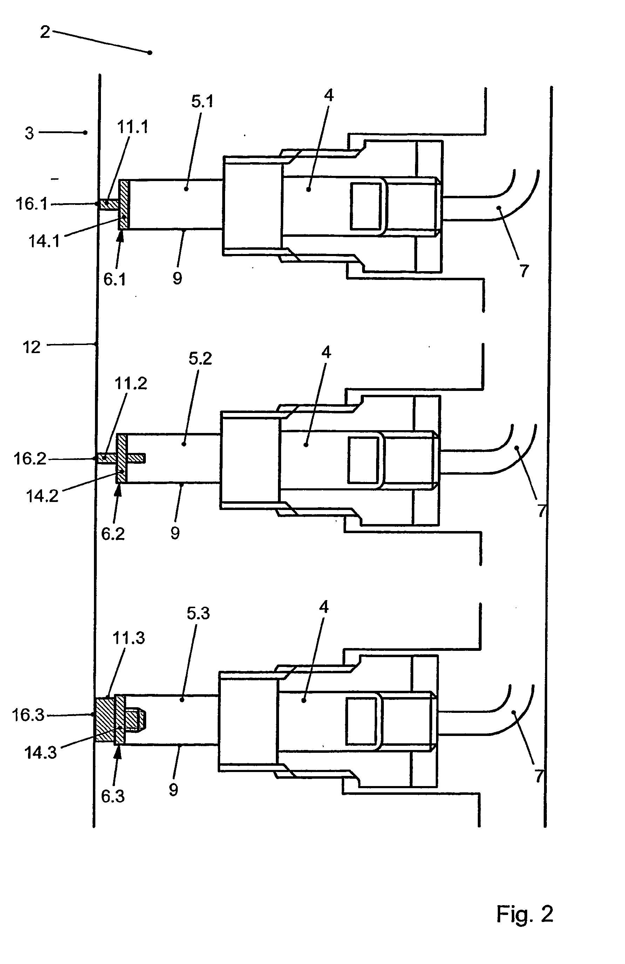

In Figur 2 sind mehrere Sensoren zu erkennen, die in der Wand 2 der Spritzgiessmaschine eingeordnet sind. Sie bestehen alle aus demselben Grundkörper 4. Sie variieren jedoch in ihren Sensor- und Aufnahmeelementen 6. Die Stirnfläche 16.1 der Spitze 11.1 des Aufnahmeelementes 6.1 hat den kleinsten Durchmesser. Das Basisteil 14.1 ist mit dem Sensorelement 5.1 verklebt.

Die Spitze 11.2 des Aufnahmeelementes 6.2 weist eine grössere Stirnfläche 16.2 auf als die Spitze 11.1 des Aufnahmeelementes 6.1. Das Basisteil 14.2 ist mit dem Sensorelement 5.2 verstiftet.

Eine noch grössere Stirnfläche 16.3 weist die Spitze 11.3 des Aufnahmeelementes 6.3 auf. Das Aufnahmeelement 6.3 ist mit seinem Basisteil 14.3 mit dem Sensorelement 5.3 verschraubt.

Die drei Darstellungen stellen eine Auswahl von verschiedenen Ausführungsformen des Sensors 1 dar. Zum einen werden verschiedene Möglichkeiten der Verbindung der Aufnahmeelemente mit den Sensorelementen je nach Anwendungsgebiet deutlich. Ferner wird ersichtlich, dass mit ein und demselben Grundkörper 4 mittels verschiedener Sensor- und Aufnahmeelemente verschiedene Bohrungen 13 einer Wand 2 bestückt werden können, ohne Hardwareänderungen vorzunehmen.

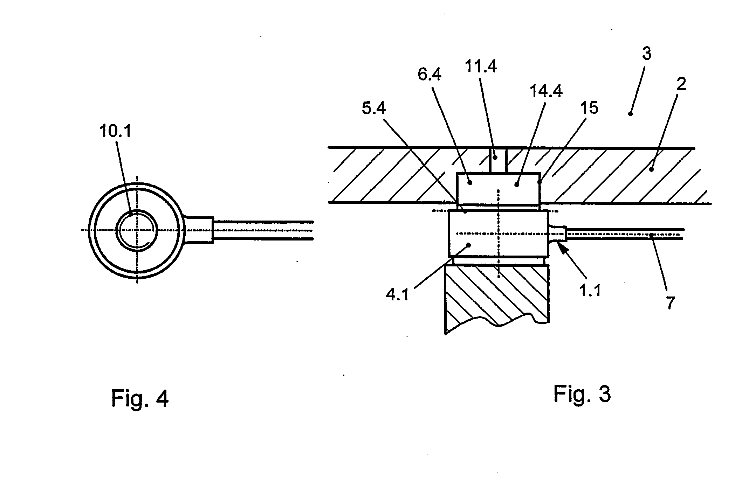

Ein weiteres Ausführungsbeispiel eines Sensors 1.1 ist in Figur 3 dargestellt. Hier handelt es sich um einen Kraftsensor, der einen Grundkörper 4.1 und ein Sensorelement 5.4 aufweist, das mit einem Aufnahmeelement 6.4 verbunden ist. Die Verbindung erfolgt in diesem Fall über ein Gewinde 10.1, wie aus Figur 4 ersichtlich wird.

Auch in diesem Aufführungsbeispiel kann jeweils der gleiche Grundkörper 4.1 und das gleiche Sensorelement 5.4 für unterschiedliche Anwendungsfälle eingesetzt werden, indem das Aufnahmeelement 6.4 und/oder die Spitze 11.4 und/oder das Basisteil 14.4 den Wünschen des Anwendungsfalles und den örtlichen Gegebenheiten entsprechend ausgewählt wird.

### Positionszahlenliste

| | | | | | |
|---|---|---|---|---|---|
| 1 | Sensor | 34 | | 67 | |
| 2 | Wand | 35 | | 68 | |
| 3 | Kavität | 36 | | 69 | |
| 4 | Grundkörper | 37 | | 70 | |
| 5 | Sensorelement | 38 | | 71 | |
| 6 | Aufnahmeelement | 39 | | 72 | |
| 7 | Kabel | 40 | | 73 | |
| 8 | Gewinde | 41 | | 74 | |
| 9 | Bohrung | 42 | | 75 | |
| 10 | Gewinde | 43 | | 76 | |
| 11 | Spitze | 44 | | 77 | |
| 12 | Innenwand | 45 | | 78 | |
| 13 | Bohrung | 46 | | 79 | |
| 14 | Basisteil | 47 | | | |
| 15 | Ausnehmung | 48 | | | |
| 16 | Stirnfläche | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Sensor zum Ermitteln einer Messgrösse in einem Spritzgiesswerkzeug mit einem Grundkörper (4, 4.1) und einem Sensorelement (5-5.4) zur Messgrössenumformung und/oder-übertragung, wobei
dem Sensorelement (5-5.4) ein Aufnahmeelement (6-6.4) zugeordnet ist,
welches die zu messende Grösse direkt von dem zu messenden Medium aufnimmt und ohne Messgrössenumformung auf das Sensorelement überträgt, wobei das Aufnahmeelement (6) ein Basisteil (14) und eine Spitze (11) umfasst, **dadurch gekennzeichnet, dass** das Aufnahmeelement (6, 6.3, 6.4) an dem Sensorelement (5, 5.3, 5.4) austauschbar ist.

2. Sensor nach Anspruch 1, **dadurch gekennzeichnet, dass** dem Sensorelement (5-5.4) unterschiedliche Aufnahmeelemente (6-6.4) zuordenbar sind.

3. Sensor nach Anspruch 1 oder 2, **dadurch gekennzeichnet, dass** austauschbare Aufnahmeelemente (6-6.4) verschiedene Querschnittsformen und/oder Querschnittsflächen zum Einbau in entsprechende Ausnehmungen (9, 13, 15) aufweisen.

4. Sensor nach wenigstens einem der Ansprüche 1 bis 3, **dadurch gekennzeichnet, dass** das Sensorelement (5-5.3) lösbar mit dem Grundkörper (4) verbunden ist.

5. Sensor nach Anspruch 4, **dadurch gekennzeichnet, dass** dem Grundkörper (4) unterschiedliche Sensorelemente (5-5.3) zuordenbar sind.

6. Sensor nach wenigstens einem der Ansprüche 1 bis 5, **dadurch gekennzeichnet, dass** das Aufnahmeelement (6-6.4) ein Druck- und/oder Kraftübertragungselement ist.

7. Sensor nach wenigstens einem der Ansprüche 1 bis 5, **dadurch gekennzeichnet, dass** das Aufnahmeelement (6-6.4) ein Temperaturübertragungselement ist.

## Claims

1. A sensor for detecting a measured variable in an injection-moulding tool, with a basic body (4, 4.1) and a sensor element (5 - 5.4) for converting and/or transmitting measured variables, wherein
a pickup element (6 - 6.4) is associated with the sensor element (5 - 5.4), which pickup element picks up the variable to be measured directly from the medium to be measured and transmits it to the sensor element without measured-variable conversion, the pickup element (6) comprising a base part (14) and a tip (11), **characterised in that** the pickup element (6, 6.3, 6.4) is exchangeable on the sensor element (5, 5.3, 5.4).

2. A sensor according to Claim 1, **characterised in that** different pickup elements (6 - 6.4) can be associated with the sensor element (5 - 5.4).

3. A sensor according to Claim 1 or 2, **characterised in that** exchangeable pickup elements (6 - 6.4) have different cross-sectional forms and/or cross-sectional surfaces for installation in corresponding cutouts (9, 13, 15).

4. A sensor according to at least one of Claims 1 to 3, **characterised in that** the sensor element (5 - 5.3) is connected detachably to the basic body (4).

5. A sensor according to Claim 4, **characterised in that** different sensor elements (5 - 5.3) can be associated with the basic body (4).

6. A sensor according to at least one of Claims 1 to 5, **characterised in that** the pickup element (6 - 6.4) is a pressure-transmission and/or force-transmission element.

7. A sensor according to at least one of Claims 1 to 5, **characterised in that** the pickup element (6 - 6.4) is a temperature transmission element.

## Revendications

1. Capteur pour déterminer une grandeur de mesure dans un moule à injection, avec un corps de base (4, 41) et un élément de capteur (5 - 5.4) destiné à la transformation et/ou à la transmission de la grandeur de mesure,
à l'élément de capteur (5 - 5.4) étant associé un élément de réception (6 - 6.4) qui reçoit la grandeur à mesurer directement du fluide à mesurer et la transmet, sans transformation de la grandeur de mesure, directement à l'élément de capteur, l'élément de réception (6) comportant une partie de base (14) et une pointe (11),
**caractérisé par le fait que** l'élément de réception (6, 6.3, 6.4) sur l'élément de capteur (5, 5.3, 5.4) est échangeable.

2. Capteur selon la revendication 1, **caractérisé par le fait qu'**à l'élément de capteur (5 - 5.4) peuvent être associés différents éléments de réception (6 - 6.4).

3. Capteur selon la revendication 1 ou 2, **caractérisé par le fait que** les éléments de réception (6 - 6.4) présentent différentes formes de section et/ou des surfaces de section pour incorporation dans des évidements correspondants (13, 15).

4. Capteur selon au moins l'une des revendications 1 à 3, **caractérisé par le fait que** l'élément de capteur (5 - 5.3) est connecté de manière amovible au corps de base (4).

5. Capteur selon la revendication 4, **caractérisé par le fait qu'**au corps de base (4) peuvent être associés des éléments de capteur (5 - 5.3) différents.

6. Capteur selon au moins l'une des revendications 1 à 5, **caractérisé par le fait que** l'élément de réception (6 - 6.4) est un élément de transmission de pression et/ou de force.

7. Capteur selon au moins l'une des revendications 1 à 5, **caractérisé par le fait que** l'élément de réception (6 - 6.4) est un élément de transmission de température.
